# EUROPEAN PATENT SPECIFICATION

(11) **EP 4 662 538 B1**
(45) Date of publication and mention of the grant of the patent: **02.12.2026**
(21) Application number: 23834087.1
(22) Date of filing: 18.12.2023
(51) Int. Cl.: G05B 19/406, G05B 23/02

(54) **CONTROL DEVICE AND METHOD FOR SETTING UPPER AND LOWER LIMIT CURVES FOR ONE OR MORE TOOLS ARRANGED TO APPLY FASTENERS**
STEUERVORRICHTUNG UND VERFAHREN ZUM EINSTELLEN VON OBEREN UND UNTEREN GRENZKURVEN FÜR EIN ODER MEHRERE WERKZEUGE ZUM ANBRINGEN VON BEFESTIGUNGSELEMENTEN
DISPOSITIF DE COMMANDE ET PROCÉDÉ DE DÉFINITION DE COURBES DE LIMITE SUPÉRIEURE ET INFÉRIEURE POUR UN OU PLUSIEURS OUTILS CONÇUS POUR APPLIQUER DES ÉLÉMENTS DE FIXATION

(30) Priority: 07.02.2023 SE 2330062
(43) Date of publication of application: 17.12.2025
(73) Proprietor: Atlas Copco Industrial Technique AB, 105 23 Stockholm (SE)
(72) Inventor: PERSSON, Erik, 169 74 Solna (SE); GUSTAFSSON, Joakim, 141 32 Huddinge (SE)
(74) Representative: Atlas Copco Industrial Technique AB
(86) International application number: PCT/EP2023/086426
(87) International publication number: WO 2024/165221

(56) References cited:
- EP-A1- 3 181 260
- WO-A1-2022/118232
- DE-A1- 102014 215 167
- DE-A1- 102017 202 641
- US-A1- 2013 139 370
- US-A1- 2020 122 279

## Description

### Field of the invention

The present invention generally relates to the field of control devices for one or more tools arranged to apply fasteners in a production process. In particular, the present invention relates to such control devices able to set limit curves to detect not okay (NOK) fastener application operations.

### Background of the invention

In industrial assembly factories, tools are used for applying fasteners to objects for the purpose of joining different pieces of material together during a production process. Examples of such tools are tightening tools for applying threaded fasteners (such as screws and nuts) and riveting tools for applying rivets.

In such production processes, it is important to detect fastener application operations performed by such tools that do not live up to the desired quality standard. Such operations are normally referred to as not okay, NOK, fastener application operations. Just to mention a few examples, such NOK fastener application operations may be operations involving a fastener of incorrect dimension, having wrong thread coating or that was slanted upon insertion, or operations when a so called stick slip occurs. The cause of a stick slip is a complex dynamic phenomenon between many physical parameters that together results in the joint starting to act like an oscillating spring and thus, the torque value oscillates at a high frequency.

In order to detect such NOK fastener application operations, trace data from the operations of a tool are collected. Such trace data normally includes values indicative of application force (e.g. torque or clamp force) versus values indicative of displacement (e.g. angle) or time and can be displayed as a graph.

Further, during a pre-production configuration process, limits for these values are normally set, typically manually by a production technician. In the succeeding production process, it is then detected if the trace data of an operation exceeds these limits. If that is the case, that fastener application operation is classified as a NOK operation and it is typically recorded as such in the production management system as well as displayed to the operator of the tool. The operator then needs to re-do the fastener application to obtain an OK result.

A disadvantage of today's solutions for setting such limits is that they typically need to be set manually. Further, it might be hard to balance the trade-off of setting the limits generous enough to not make false NOK detections, yet strict enough to not miss out operations that are supposed to be detected as NOK. Failing in finding this balance results in a less accurate NOK operation detecting process.

DE 102017202641A1 discloses a method for evaluating a mechanical connection made by means of a tool, wherein evaluation ranges are defined and it is checked whether a measured value curve runs within or outside the evaluation ranges.

DE 102014215137 A1 discloses screwdriving and/or riveting system for performing a screw connection or rivet setting and a method for monitoring a screwdriving and/or riveting system. The screwdriving and/or riveting system comprises a tolerance range adjustment unit for setting a tolerance range with an envelope around a curve of parameters recorded by a recording device in the case of machining carried out with the screwdriving and/or riveting system, and a determination unit for determining whether the curve of the parameters in the screw and/or riveting system is to be changed in a further machining carried out with the screwing and/or riveting system tolerance range.

EP 3181260 A1 discloses an intelligent hand-held rivet-placement apparatus wherein the hand-held rivet-placement apparatus is arranged for: providing data detected by means of a sensor for force-displacement-curves, and comparing these curves with each other in order to derive the action of a particular rivet-placement apparatus from the comparison results. In particular, the rivet mandrel slip can be obtained and the quality of the rivet connection can analyzed, recorded and documented.

### Summary of the invention

It would be advantageous to achieve a control device and a method of overcoming, or at least alleviating, the above mentioned drawbacks. In particular, it would be desirable to enable a control device and a method that facilitates setting limits for the purpose of detecting NOK fastener application operations. It would also be desirable to enable a more accurate NOK fastener application operation detecting process.

To better address one or more of these concerns, a control device and a method having the features defined in the independent claims are provided. Preferable embodiments are defined in the dependent claims.

Hence, according to a first aspect, a control device for one or more tools arranged to apply fasteners in a production process is provided. The control device is configured to, in a production configuration process:
- obtain a set of trace data for a plurality of test fastening application operations performed by at least one of said one or more tools on one type pf joint, the trace data including, for each fastener application operation, values indicative of application force versus values indicative of displacement or time or a derivative thereof;
- from said set of trace data, derive maximum values indicative of application force, or the derivative thereof, for each one of a plurality of the values indicative of displacement or time, and calculate a first polynomial based on these maximum values;
- from said set of trace data, derive minimum values indicative of application force, or the derivative thereof, for each one of a plurality of the values indicative of displacement or time, and calculate a second polynomial based on these minimum values;
- based on said first polynomial, set an upper limit curve; and
- based on said second polynomial, set a lower limit curve;
the control device being further configured to, in the production process following said production configuration process:
- determine that a fastener application operation performed by any one of said one or more tools is not okay (NOK) if at least some of its trace data exceeds the upper limit curve and/or falls below the lower limit curve.

According to a second aspect, a method for a control device for one or more tools arranged to apply fasteners in a production process is provided. The method comprises, in a production configuration process:
- obtaining a set of trace data for a plurality of test fastening application operations performed by at least one of said one or more tools on one type pf joint, the trace data including, for each fastener application operation, values indicative of application force versus values indicative of displacement or time or a derivative thereof;
- from said set of trace data, deriving maximum values indicative of application force, or the derivative thereof, for each one of a plurality of the values indicative of displacement or time, and calculating a first polynomial based on these maximum values;
- from said set of trace data, deriving minimum values indicative of application force, or the derivative thereof, for each one of a plurality of the values indicative of displacement or time, and calculating a second polynomial based on these minimum values;
- based on said first polynomial, setting an upper limit curve; and
- based on said second polynomial, setting a lower limit curve;
the method further comprising, in the production process following said production configuration process:
- determining that a fastener application operation performed by any one of said one or more tools is not okay (NOK) if at least some of its trace data exceeds the upper limit curve and/or falls below the lower limit curve.

The inventors have realized that by calculating polynomials based on the maximum and minimum values indicative of application force (for each one of a plurality of the values indicative of displacement or time), or a derivative thereof, for several test fastener application operations, upper and lower limit curves for NOK operation detection can be automatically created. The area between the upper and lower limit curves may be referred to as an envelope of allowable values. Hence, with the present aspects, an envelope defining the limits between OK/NOK values can be automatically created. Since the envelope is based on polynomials calculated based on maximum and minimum values of several actual test fastener application operations on one type of joint, it will ensure a balanced trade-off between the generosity and strictness of the limits, whereby the accuracy of NOK operation detection is improved. By using polynomials, the envelope (i.e. the upper and lower limit curves) will not follow all the irregularities of a single fastener application operation. Instead, smooth curves are provided for limiting OK from NOK values.

Further, by generating upper and lower limits in the form of curves, it is possible to detect NOK operations wherein not just the final maximum values are evaluated, but possibly also values throughout one, several or all of different steps of the operation. That enables detecting more types of NOK operations, such as stick slip, wherein the torque oscillates during the torque build up phase while the final end torque might be within acceptable limits.

The polynomials may be calculated based on the value indicative of the application force over displacement/time, or on a derivative (of the first or second order) of the value indicative of the application force over displacement/time. Both of these may be used as a basis for detecting OK/NOK fastener application operations.

In the present specification, the term "values indicative of application force" means values of a parameter that in some way reflects/represents the force applied by the tool to the fastener. For example, in case the tool is a tightening tool, such a parameter may be a torque as sensed by e.g. a torque sensor of the tool, a motor current (which is representative of the torque) or a clamp force as sensed by e.g. an ultrasonic sensor of the tool. As another example, in case the tool is a riveting tool, such a parameter may e.g. be the motor current (which reflects the force applied by the tool in the rivet). Other parameters may also be envisaged.

Further, in the present specification, the term "values indicative of displacement or time" means values of a parameter that in some way reflects/represents the progression of the operation. In the case of a tightening tool, that parameter may e.g. be the angle as sensed by an angle sensor. In case of a riveting tool, that parameter may be the time from the start of the riveting operation. Other parameters may also be envisaged.

Further, in the present specification, the term "one type of joint" means joints that have the same characteristics. For example, the test fastener applications may be made on the same corresponding single joint in several equal assemblies. Alternatively, the test fastener applications may be made on several joints in one (or several equal) assemblies, as long as these joints have the same characteristics in terms of e.g. stiffness (softness/hardness), friction etc. For example, the joints may join the same pieces of material and include the same type of fastener. The point is that the collected trace data of OK fastener application operations preferably should follow roughly the same path, at least for each step of the fastener application operations, in order to generate adequate polynomials.

For example, the upper and lower limit curves may be set to equal the first and second polynomials, respectively. Alternatively, a (slight) marginal to the polynomials may be added. Preferably, the upper and lower curves may be set to follow the first and second polynomials, respectively.

According to an embodiment, the number of degrees of the first and second polynomials may be at least 2, preferably at least 3, and most preferably at least 4.

According to an embodiment, the number of degrees of the first and second polynomials may be at maximum 6, preferably at maximum 5.

Having too few degrees of the polynomials will make them less adaptive, while having too many degrees will make them more sensitive, which might end up in curves having a too oscillating character. The inventors have found that around 4 to 5 degrees of the polynomials is perhaps the most optimal trade-off in this respect.

According to an embodiment, the first and second polynomials may be calculated using regression analysis, such as by using the least square method. Hereby, an efficient way of approximating the polynomials that best fits the maximum and minimum values is provided.

According to an embodiment, the control device may be further configured to, subsequent to obtaining the set of trace data of the test fastener application operations, and prior to the steps of deriving the maximum and minimum values:
- if the obtained set of trace data comprises trace data considered to represent not okay (NOK) test fastener application operations, remove that trace data from the set.

The present embodiment is advantageous in that test trace data of NOK operations is removed/discarded before the maximum and minimum values are derived. Hence, the polynomials will be adapted solely to OK test operations, which will improve the accuracy of the resulting upper and lower limit curves.

The removal of the trace data of the NOK test fastener application operations may e.g. be made upon command of a user/operator (e.g. via input from a user interface), or automatically e.g. by using a machine learning model for identifying the NOK test fastener application operations.

According to an embodiment, the control device may be further configured to, in the production process:
- during a fastener application operation performed by at least one of said one or more tools, continuously monitor whether at least some of the resulting trace data exceeds the upper limit curve and/or falls below the lower limit curve.

Hence, it is possible to detect that an ongoing fastener application operation is not turning out at as desired before the complete operation is terminated.

According to an embodiment, the control device may be further configured to:
- trigger (preferably immediate) interruption of the fastener application operation in response to said resulting trace data exceeding the upper limit curve and/or falling below the lower limit curve.

Hence, the fastener application operation can be interrupted as soon as its trace data goes outside the envelope of allowed values. Thus, the evaluation of the trace data is not awaited with until after termination of a complete operation. The present embodiment is advantageous in that damage to the material to which the fastener is applied as well as to the fastener itself can be prevented or at least reduced.

According to an embodiment, the tool may be a tightening tool or a riveting tool.

According to an embodiment, the control device may be further configured to:
- divide said set of trace data into at least two sets representing at least two different steps of the fastener application operation;
- calculate first and second polynomials for each one of said at least two steps; and
- set the upper limit curve and the lower limit curve for each step based on the, for each step, calculated first and second polynomials, respectively.

That is, for each one of the two sets of trace data, maximum values indicative of application force may be derived to calculate the first polynomial, and minimum values indicative of application force may be derived to calculate the second polynomial. Hence, different first polynomials may be provided for the different steps and different second polynomials may be provided for the different sets. In other words, each one of several steps of the fastener application operations will have individual upper and lower limit curves. Thereby, the upper and lower limit curves of each step will be better tailored to the test trace data of that step.

Examples of steps of a tightening operation may be the steps of: run down (up to when the fastener head meets the work piece), snug (when the pieces of material of the work piece are being compressed), torque build up (upon completion of the compression and when the torque builds up in the joint) and brake (when applied torque is interrupted).

According to an embodiment, a system is provided. The system comprises one or more tools arranged to apply fasteners in a production process; and a control device as defined according to the first aspect.

According to an embodiment, a computer program is provided comprising instructions which, when the program is executed by a computer (such as a control device), cause the computer to carry out the method as defined according to the second aspect.

According to an embodiment, a computer-readable storage medium is provided comprising instructions which, when executed by a computer (such as a control device), cause the computer to carry out the method as defined according to the second aspect.

It is noted that embodiments of the invention relates to all possible combinations of features recited in the claims. Further, it will be appreciated that the various embodiments described for the control device are all combinable with the method as defined in accordance with the second aspect of the present invention.

### Brief description of the drawings

These and other aspects will now be described in more detail in the following illustrative and non-limiting detailed description of embodiments, with reference to the appended drawings.
Figure 1 shows a system according to an embodiment.
Figure 2 shows a graph of trace data according to an embodiment.
Figure 3 shows the graph of trace data of Figure 2 with trace data of a NOK operation illustrated.
Figure 4 shows a graph of trace data according to an embodiment
Figure 5 shows a method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

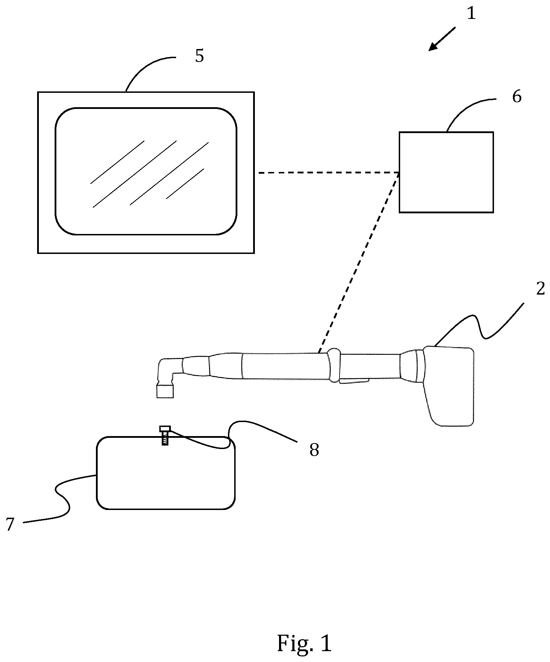

A system 1 according to an embodiment will be described with reference to Figure 1. The system 1 comprises at least one tool 2 for applying fasteners 8 to a work piece 7 in an industrial production process. The tool 2 may e.g. be a tightening tool (as illustrated in Figure 1) for applying threaded fasteners 8 or a riveting tool (not shown) for applying rivets.

The system 1 may further comprise a control device 6 configured to control the tool 2. The control device 6 may be in communication with the tool 2, e.g. by wire or wirelessly. The control device 6 may be a remote single unit (such as a computer and as illustrated in Figure 1), distributed in several units (such as cloud based), and/or comprised in the tool 2. The control device 6 may comprise a memory for storing coded instructions and processing means for executing the coded instructions.

The system 1 may optionally further comprise a display 5 for displaying information of the fastener application operations performed by the tool 2. The display 5 may be a separate unit (as illustrated in Figure 1) or incorporated in the control device 6 and/or in the tool 2.

In industrial manufacturing, a pre-production configuration process may be performed in order to set up the system 1 for the upcoming production process. In such a pre-production configuration process, the equipment to be used and processing steps that are to be performed may be tested and configured for the specific assembly to be performed.

In the present example, upper and lower limit curves may be defined in such a pre-production configuration process for the purpose of being able to detect not okay (NOK) fastener application operations performed by the tool 2 later on in the production process. Such upper and lower limit curves may also be redefined/updated during a subsequent production configuration process, e.g. if a new batch of fasteners is to be used that has a higher friction compared to previous batches. An example of how these upper and lower limit curves may be set will be described in more detail in the following.

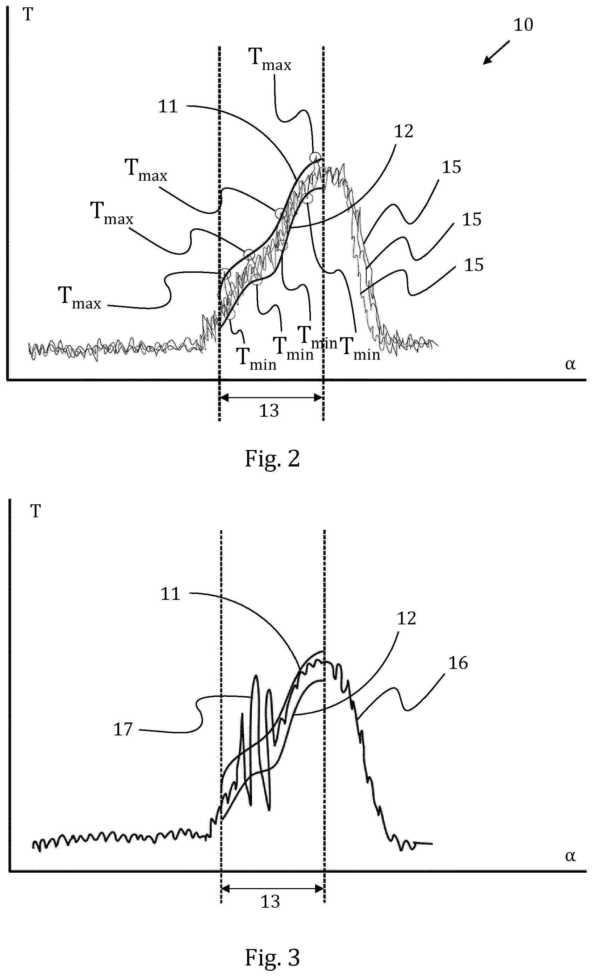

Figure 2 shows a graph 10 of trace data 15 of a set of test fastener application operations performed by the tool on one type of joint during the production configuration process (which may be a pre-production configuration process or a subsequent production configuration process). The trace data 15 of each operation may be displayed as a curve illustrating how a parameter T indicative of the force applied to the fastener by the tool (such as torque) varies with the progression of the operation. The progression of the operation is represented by a parameter α indicative of displacement (such as angle) or time.

The trace data may alternatively (or as a complement) be displayed as the derivative of the parameter T with respect to displacement or time α (not shown).

The control device may be configured to obtain this trace data 15 from the tool and optionally display it (such as in the form of the graph 10 illustrated in Figure 2) on the display to an operator.

If the obtained set of trace data 15 includes any test operation that is considered NOK, the trace data of that operation may be removed, e.g. by the operator or by means of a machine learning model.

Then, the control device may be configured to derive, for each one of a plurality of displacement or time values (such as angle) α, maximum values Tₘₐₓ and minimum values Tₘᵢₙ of the application force (such as torque) from the set of trace data 15. In Figure 2, merely a few maximum values Tₘₐₓ and minimum values Tₘᵢₙ are illustrated for the sake of simplicity, however, it will be appreciated that maximum values Tₘₐₓ and minimum values Tₘᵢₙ for many more displacement or time values α may be derived, such as for hundreds or thousands of displacement or time values α depending on the sample rate of the trace data.

The plurality of displacement or time values α for which the maximum and minimum values Tₘₐₓ and Tₘᵢₙ are derived may e.g. represent a certain part of, or the complete, fastener application operations. Such a certain part may e.g. correspond to a certain step of the fastener application operation. In the example illustrated in Figure 2, the plurality of displacement or time values α for which the maximum and minimum values Tₘₐₓ and Tₘᵢₙ are derived may represent a torque build up step 13 of a tightening operation.

The control device may further be configured to calculate a first polynomial based on the maximum values Tₘₐₓ and a second polynomial based on the minimum values Tₘᵢₙ. For example, a method based on regression analysis, such as the least square method, may be used to calculate the polynomials.

The first polynomial is then a basis for setting an upper limit curve 11 and the second polynomial is a basis for setting a lower limit curve 12. For example, the upper and lower limit curves 11, 12 may equal the first and second polynomials, respectively (as illustrated in Figure 2). Alternatively, the upper and lower limit curves 11, 12 may be set slightly offset from the first and second polynomials. As can be seen in Figure 2, the upper and lower limit curves 11, 12 smoothly approximates an envelope following the maximum and minimum values Tₘₐₓ and Tₘᵢₙ. Preferably, the number of degrees of the first and second polynomials may be between 2 and 6, such as 4 or 5.

Optionally, the upper and lower limit curves 11, 12 may be editable by a user before finally set.

In the succeeding production process, these limit curves 11, 12 may be used for detecting NOK fastener application operations. This will be explained in the following with reference to Figure 3.

In the production process, the control device is configured to obtain, preferably continuously, trace data 16 of operations performed by the tool. If it is detected that this trace data 16 goes outside the envelope as defined by the upper and lower limit curves 11, 12, it is determined that the operation is a NOK operation. The trace data 16 may be monitored continuously during the operation with respect to the limit curves 11, 12, and the operation may be interrupted as soon as trace data 16 falls outside the envelope. Alternatively, the trace data 16 may be compared with the limit curves 11, 12 after the complete operation is ended.

In the example illustrated in Figure 3, trace data 16 of a tightening operation that includes a stick slip is illustrated. As can be seen, the trace data 16 oscillates 17 outside the envelope as defined by the limit curves 11, 12. Therefore, that operation will be classified as a NOK operation by the control device.

For example, the control device may be further configured to display the outcome of the OK/NOK classification of the operation on the display and/or record/save it to the production management system.

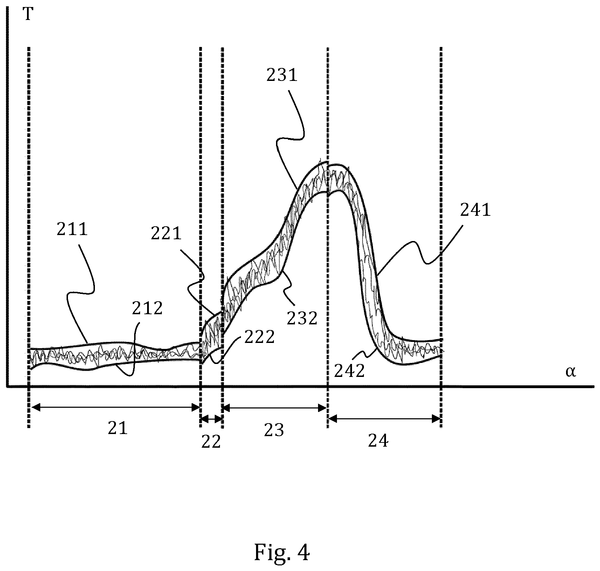

According to an embodiment, the control device may be configured to divide the trace data of an operation into several sets, each one corresponding to a predefined step of the operation. In the example illustrated in Figure 4, a tightening operation is divided into the steps: run down 21, snug 22, torque build-up 23 and brake 24. Here, maximum and minimum values Tₘₐₓ and Tₘᵢₙ are derived for a plurality of displacement or time values α defined for each phase 21, 22, 23, 24. The limits between the different steps may be defined not as numeric displacement or time values, but rather as when particular conditions are met. For example, the snug step 21 may be defined as ended when the torque starts to rise. Then, one first polynomial and one second polynomial are calculated for each one of the steps 21, 22, 23, 24 based on these maximum and minimum values Tₘₐₓ and Tₘᵢₙ. Upper limit curves 211, 221, 231 241 and lower limit curves 212, 222, 232, 242 for each step may then be set accordingly.

The trace data curves may be aligned for each step 21, 22, 23, 24. However, this is mere a display issue, when calculating the polynomials the relevant displacement or time values for the specific step in question is used to derive the maximum and minimum values.

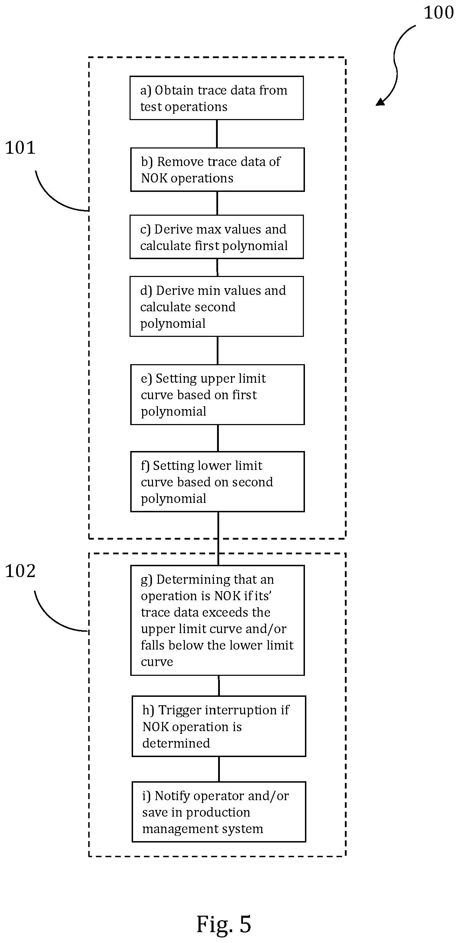

A method 100 according to an embodiment will now be described with reference to Figure 5. The method 100 may be performed by a control device, such as the one described with reference to Figure 1.

The method 100 comprises, in a production configuration process 101:
a) obtaining a set of trace data for a plurality of test fastening application operations performed by at least one of said one or more tools on one type of joint, the trace data including, for each fastener application operation, values indicative of application force versus values indicative of displacement or time or a derivative thereof;
b) optionally, if the obtained set of trace data comprises trace data considered to represent not okay (NOK) test fastener application operations, removing that trace data;
c) from said set of trace data, deriving maximum values indicative of application force, or the derivative thereof, for each one of a plurality of the values indicative of displacement or time, and calculating a first polynomial based on these maximum values;
d) from said set of trace data, deriving minimum values indicative of application force, or the derivative thereof, for each one of a plurality of the values indicative of displacement or time, and calculating a second polynomial based on these minimum values;
e) based on said first polynomial, setting an upper limit curve; and
f) based on said second polynomial, setting a lower limit curve.

The method 100 further comprises, in the production process 102 following the production configuration process 101:
g) determining that a fastener application operation performed by any one of said one or more tools is not okay (NOK) if at least some of its' trace data exceeds the upper limit curve and/or falls below the lower limit curve. Optionally, the fastener application operation may be determined as OK otherwise.

Optionally, the method 100 may further comprise:
h) triggering interruption of the fastener application operation in response to said resulting trace data exceeding the upper limit curve and/or falling below the lower limit curve; and/or
i) notifying an operator and/or saving in a production management system the results of the determination in step g).

It will be appreciated that the embodiments described for the control device are all combinable with embodiments of the method.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. Control device (6) for one or more tools (2) arranged to apply fasteners (8) in a production process,
the control device being configured to, in a production configuration process:
- obtain a set of trace data (15) for a plurality of test fastening application operations performed by at least one of said one or more tools on one type of joint, the trace data including, for each fastener application operation, values indicative of application force versus values indicative of displacement or time or a derivative thereof;
- from said set of trace data, derive maximum values (Tₘₐₓ) indicative of application force, or the derivative thereof, for each one of a plurality of the values (α) indicative of displacement or time, and calculate a first polynomial based on these maximum values;
- from said set of trace data, derive minimum values (Tₘᵢₙ) indicative of application force, or the derivative thereof, for each one of a plurality of the values (α) indicative of displacement or time, and calculate a second polynomial based on these minimum values;
- based on said first polynomial, set an upper limit curve (11); and
- based on said second polynomial, set a lower limit curve (12);
the control device being further configured to, in the production process following said production configuration process:
- determine that a fastener application operation performed by any one of said one or more tools is not okay (NOK) if at least some of its trace data (16) exceeds the upper limit curve and/or falls below the lower limit curve.

2. Control device as defined in claim 1, wherein the number of degrees of the first and second polynomials is at least 2.

3. Control device as defined in claim 1 or 2, wherein the number of degrees of the first and second polynomials is at maximum 6.

4. Control device as defined in any one of the preceding claims, wherein the first and second polynomials are calculated using regression analysis, such as by using the least square method.

5. Control device as defined in any one of the preceding claims, further configured to, subsequent to obtaining the set of trace data of the test fastener application operations, and prior to the steps of deriving the maximum and minimum values:
- if the obtained set of trace data comprises trace data considered to represent not okay (NOK) test fastener application operations, remove that trace data.

6. Control device as defined in any one of the preceding claims, further configured to, in the production process:
- during a fastener application operation performed by at least one of said one or more tools, continuously monitor whether at least some of the resulting trace data exceeds the upper limit curve and/or falls below the lower limit curve.

7. Control device as defined in claim 6, further configured to:
- trigger interruption of the fastener application operation in response to said resulting trace data exceeding the upper limit curve and/or falling below the lower limit curve.

8. Control device as defined in any one of the preceding claims, wherein the tool is a tightening tool or a riveting tool.

9. Control device as defined in any one of the preceding claims, further configured to:
- divide said set of trace data into at least two sets representing at least two different steps (21, 22, 23, 24) of the fastener application operation;
- calculate first and second polynomials for each one of said at least two steps; and
- set the upper limit curve (211, 221, 231, 241) and the lower limit curve (212, 222, 232, 242) for each step based on the, for each step, calculated first and second polynomials, respectively.

10. System (1) comprising:
- one or more tools (2) arranged to apply fasteners (8) in a production process; and
- a control device (6) according to any one of the preceding claims.

11. Method (100) for a control device for one or more tools arranged to apply fasteners in a production process,
the method comprising, in a production configuration process (101):
- obtaining (a) a set of trace data for a plurality of test fastening application operations performed by at least one of said one or more tools on one type of joint, the trace data including, for each fastener application operation, values indicative of application force versus values indicative of displacement or time or a derivative thereof;
- from said set of trace data, deriving (c) maximum values indicative of application force, or the derivative thereof, for each one of a plurality of the values indicative of displacement or time, and calculating a first polynomial based on these maximum values;
- from said set of trace data, deriving (d) minimum values indicative of application force, or the derivative thereof, for each one of a plurality of the values indicative of displacement or time, and calculating a second polynomial based on these minimum values;
- based on said first polynomial, setting (e) an upper limit curve; and
- based on said second polynomial, setting (f) a lower limit curve;
the method further comprising, in the production process (102) following said production configuration process:
- determining (g) that a fastener application operation performed by any one of said one or more tools is not okay (NOK) if at least some of its trace data exceeds the upper limit curve and/or falls below the lower limit curve.

12. Computer program comprising instructions which, when the program is executed by a computer, cause the computer to carry out the method as defined in claim 11.

13. Computer-readable storage medium comprising instructions which, when executed by a computer, cause the computer to carry out the method as defined in claim 11.

## Patentansprüche

1. Steuervorrichtung (6) für ein oder mehrere Werkzeuge (2), die eingerichtet sind, um Befestigungselemente (8) in einem Produktionsprozess anzubringen,
wobei die Steuervorrichtung in einem Produktionskonfigurationsprozess konfiguriert ist zum:
- Erhalten eines Satzes von Trace-Daten (15) für eine Vielzahl von Testbefestigungsanbringungsvorgängen, die durch mindestens eines des einen oder der mehreren Werkzeuge an einer Art von Verbindung durchgeführt werden, wobei die Trace-Daten für jeden Befestigungselementanbringungsvorgang Werte, die eine Anbringungskraft anzeigen, gegenüber Werten, die eine Verschiebung oder Zeit anzeigen, oder eine Ableitung davon einschließen;
- Ableiten, aus dem Satz von Trace-Daten, von Maximalwerten [Tₘₐₓ], die die Anbringungskraft anzeigen, oder der Ableitung davon für jeden einer Vielzahl der Werte (α), die die Verschiebung oder Zeit anzeigen, und Berechnen eines ersten Polynoms basierend auf diesen Maximalwerten;
- Ableiten, aus dem Satz von Trace-Daten, von Minimalwerten (Tₘᵢₙ), die die Anbringungskraft anzeigen, oder der Ableitung davon für jeden einer Vielzahl der Werte (α), die die Verschiebung oder Zeit anzeigen, und Berechnen eines zweiten Polynoms basierend auf diesen Minimalwerten;
- Festlegen, basierend auf dem ersten Polynom, einer oberen Grenzkurve (11); und
- Festlegen, basierend auf dem zweiten Polynom, einer unteren Grenzkurve (12);
wobei die Steuervorrichtung in dem auf den Produktionskonfigurationsprozess folgenden Produktionsprozess ferner konfiguriert ist zum:
- Bestimmen, dass ein Befestigungselementanbringungsvorgang, der durch ein beliebiges des einen oder der mehreren Werkzeuge durchgeführt wird, nicht in Ordnung (NOK) ist, falls mindestens einige seiner Trace-Daten (16) die obere Grenzkurve überschreiten und/oder unter die untere Grenzkurve fallen.

2. Steuervorrichtung nach Anspruch 1, wobei die Anzahl der Grade des ersten und des zweiten Polynoms mindestens 2 ist.

3. Steuervorrichtung nach Anspruch 1 oder 2, wobei die Anzahl der Grade des ersten und des zweiten Polynoms maximal 6 ist.

4. Steuervorrichtung nach einem der vorstehenden Ansprüche, wobei das erste und das zweite Polynom unter Verwendung einer Regressionsanalyse, wie durch Verwenden des Verfahrens der kleinsten Quadrate, berechnet werden.

5. Steuervorrichtung nach einem der vorstehenden Ansprüche, die nach dem Erhalten des Satzes von Trace-Daten der Testbefestigungselementanbringungsvorgänge und vor den Schritten des Ableitens der Maximal- und Minimalwerte ferner konfiguriert ist zum:
- falls der erhaltene Satz von Trace-Daten Trace-Daten umfasst, von denen erachtet wird, dass sie Testbefestigungselementanbringungsvorgänge darstellen, die nicht in Ordnung (NOK) sind, Entfernen dieser Trace-Daten.

6. Steuervorrichtung nach einem der vorstehenden Ansprüche, die in dem Produktionsprozess ferner konfiguriert ist zum:
- kontinuierlichen Überwachen, während eines Befestigungselementanbringungsvorgangs, der durch mindestens eines des einen oder der mehreren Werkzeuge durchgeführt wird, ob mindestens einige der resultierenden Trace-Daten die obere Grenzkurve überschreiten und/oder unter die untere Grenzkurve fallen.

7. Steuervorrichtung nach Anspruch 6, die ferner konfiguriert ist zum:
- Auslösen einer Unterbrechung des Befestigungselementanbringungsvorgangs als Reaktion darauf, dass die resultierenden Trace-Daten die obere Grenzkurve überschreiten und/oder unter die untere Grenzkurve fallen.

8. Steuervorrichtung nach einem der vorstehenden Ansprüche, wobei das Werkzeug ein Anziehwerkzeug oder ein Nietwerkzeug ist.

9. Steuervorrichtung nach einem der vorstehenden Ansprüche, die ferner konfiguriert ist zum:
- Unterteilen des Satzes von Trace-Daten in mindestens zwei Sätze, die mindestens zwei verschiedene Schritte (21, 22, 23, 24) des Befestigungselementanbringungsvorgangs darstellen;
- Berechnen des ersten und des zweiten Polynoms für jeden der mindestens zwei Schritte; und
- Festlegen der oberen Grenzkurve (211, 221, 231, 241) und der unteren Grenzkurve (212, 222, 232, 242) für jeden Schritt basierend auf dem für jeden Schritt berechneten ersten beziehungsweise zweiten Polynom.

10. System (1) umfassend:
- ein oder mehrere Werkzeuge (2), die eingerichtet sind, um Befestigungselemente (8) in einem Produktionsprozess anzubringen; und
- eine Steuervorrichtung (6) nach einem der vorstehenden Ansprüche.

11. Verfahren (100) für eine Steuervorrichtung für ein oder mehrere Werkzeuge, die eingerichtet sind, um Befestigungselemente in einem Produktionsprozess anzubringen,
das Verfahren umfassend, in einem Produktionskonfigurationsprozess (101):
- Erhalten (a) eines Satzes von Trace-Daten für eine Vielzahl von Testbefestigungsanbringungsvorgängen, die durch mindestens eines des einen oder der mehreren Werkzeuge an einer Art von Verbindung durchgeführt werden, wobei die Trace-Daten für jeden Befestigungselementanbringungsvorgang Werte, die eine Anbringungskraft anzeigen, gegenüber Werten, die eine Verschiebung oder Zeit anzeigen, oder eine Ableitung davon einschließen;
- Ableiten (c), aus dem Satz von Trace-Daten, von Maximalwerten, die die Anbringungskraft anzeigen, oder der Ableitung davon für jeden einer Vielzahl der Werte, die die Verschiebung oder Zeit anzeigen, und Berechnen eines ersten Polynoms basierend auf diesen Maximalwerten;
- Ableiten (d), aus dem Satz von Trace-Daten, von Minimalwerten, die die Anbringungskraft anzeigen, oder der Ableitung davon für jeden einer Vielzahl der Werte, die die Verschiebung oder Zeit anzeigen, und Berechnen eines zweiten Polynoms basierend auf diesen Minimalwerten;
- Festlegen (e), basierend auf dem ersten Polynom, einer oberen Grenzkurve; und
- Festlegen (f), basierend auf dem zweiten Polynom, einer unteren Grenzkurve;
das Verfahren ferner umfassend, in dem auf den Produktionskonfigurationsprozess folgenden Produktionsprozess (102):
- Bestimmen (g), dass ein Befestigungselementanbringungsvorgang, der durch ein beliebiges des einen oder der mehreren Werkzeuge durchgeführt wird, nicht in Ordnung (NOK) ist, falls mindestens einige seiner Trace-Daten die obere Grenzkurve überschreiten und/oder unter die untere Grenzkurve fallen.

12. Computerprogramm, umfassend Anweisungen, die, wenn das Programm durch einen Computer ausgeführt wird, den Computer veranlassen, das Verfahren nach Anspruch 11 vorzunehmen.

13. Computerlesbares Speichermedium, umfassend Anweisungen, die, wenn sie durch einen Computer ausgeführt werden, den Computer veranlassen, das Verfahren nach Anspruch 11 vorzunehmen.

## Revendications

1. Dispositif de commande (6) pour un ou plusieurs outils (2) agencés pour appliquer des éléments de fixation (8) dans un processus de production,
le dispositif de commande étant configuré pour, dans un processus de configuration de production :
- obtenir un ensemble de données de trace (15) pour une pluralité d'opérations d'application de fixation de test effectuées par au moins l'un parmi ledit ou lesdits outils sur un type de joint, les données de trace comportant, pour chaque opération d'application d'élément de fixation, des valeurs indiquant la force d'application en fonction de valeurs indiquant le déplacement ou le temps ou une dérivée de ceux-ci ;
- à partir dudit ensemble de données de trace, déduire des valeurs maximales [Tₘₐₓ] indiquant la force d'application, ou sa dérivée, pour chacune d'une pluralité des valeurs (α) indiquant le déplacement ou le temps, et calculer un premier polynôme sur la base de ces valeurs maximales ;
- à partir dudit ensemble de données de trace, déduire des valeurs minimales (Tₘᵢₙ) indiquant la force d'application, ou sa dérivée, pour chacune d'une pluralité des valeurs (α) indiquant le déplacement ou le temps, et calculer un second polynôme sur la base de ces valeurs minimales ;
- sur la base dudit premier polynôme, définir une courbe de limite supérieure (11) ; et
- sur la base dudit second polynôme, définir une courbe de limite inférieure (12) ;
le dispositif de commande étant en outre configuré pour, dans le processus de production suivant ledit processus de configuration de production :
- déterminer qu'une opération d'application d'élément de fixation effectuée par l'un quelconque dudit ou desdits outils n'est pas conforme (NOK) si au moins une partie de ses données de trace (16) dépasse la courbe de limite supérieure et/ou se situe en dessous de la courbe de limite inférieure.

2. Dispositif de commande selon la revendication 1, dans lequel le nombre de degrés des premier et second polynômes est d'au moins 2.

3. Dispositif de commande selon la revendication 1 ou 2, dans lequel le nombre de degrés des premier et second polynômes est au maximum de 6.

4. Dispositif de commande selon l'une quelconque des revendications précédentes, dans lequel les premier et second polynômes sont calculés à l'aide d'une analyse de régression, telle qu'en utilisant la méthode des moindres carrés.

5. Dispositif de commande selon l'une quelconque des revendications précédentes, configuré en outre pour, à la suite de l'obtention de l'ensemble de données de trace des opérations d'application d'élément de fixation de test, et avant les étapes de déduction des valeurs maximale et minimale :
- si l'ensemble de données de trace obtenu comprend des données de trace considérées comme représentant des opérations d'application d'élément de fixation de test non conformes (NOK), supprimer ces données de trace.

6. Dispositif de commande selon l'une quelconque des revendications précédentes, configuré en outre pour, dans le processus de production :
- pendant une opération d'application d'élément de fixation effectuée par au moins l'un parmi ledit ou lesdits outils, surveiller en continu si au moins une partie des données de trace résultantes dépasse la courbe de limite supérieure et/ou tombe en dessous de la courbe de limite inférieure.

7. Dispositif de commande selon la revendication 6, configuré en outre pour :
- déclencher l'interruption de l'opération d'application d'élément de fixation en réponse au fait que lesdites données de trace résultantes dépassent la courbe de limite supérieure et/ou se situent en dessous de la courbe de limite inférieure.

8. Dispositif de commande selon l'une quelconque des revendications précédentes, dans lequel l'outil est un outil de serrage ou un outil de rivetage.

9. Dispositif de commande selon l'une quelconque des revendications précédentes, configuré en outre pour :
- diviser ledit ensemble de données de trace en au moins deux ensembles représentant au moins deux étapes différentes (21, 22, 23, 24) de l'opération d'application d'élément de fixation ;
- calculer des premier et second polynômes pour chacune desdites au moins deux étapes ; et
- définir la courbe de limite supérieure (211, 221, 231, 241) et la courbe de limite inférieure (212, 222, 232, 242) pour chaque étape sur la base des premier et second polynômes calculés pour chaque étape, respectivement.

10. Système (1) comprenant :
- un ou plusieurs outils (2) agencés pour appliquer des éléments de fixation (8) dans un processus de production ; et
- un dispositif de commande (6) selon l'une quelconque des revendications précédentes.

11. Procédé (100) pour un dispositif de commande pour un ou plusieurs outils agencés pour appliquer des éléments de fixation dans un processus de production,
le procédé comprenant, dans un processus de configuration de production (101) :
- l'obtention (a) d'un ensemble de données de trace pour une pluralité d'opérations d'application de fixation de test effectuées par au moins l'un parmi ledit ou lesdits outils sur un type de joint, les données de trace comportant, pour chaque opération d'application d'élément fixation, des valeurs indiquant la force d'application en fonction de valeurs indiquant le déplacement ou le temps ou une dérivée de ceux-ci ;
- à partir dudit ensemble de données de trace, la déduction (c) des valeurs maximales indiquant la force d'application, ou sa dérivée, pour chacune d'une pluralité des valeurs indiquant le déplacement ou le temps, et le calcul d'un premier polynôme sur la base de ces valeurs maximales ;
- à partir dudit ensemble de données de trace, la déduction (d) des valeurs minimales indiquant la force d'application, ou la dérivée de celle-ci, pour chacune d'une pluralité des valeurs indiquant le déplacement ou le temps, et le calcul d'un second polynôme sur la base de ces valeurs minimales ;
- sur la base dudit premier polynôme, l'établissement (e) d'une courbe de limite supérieure ; et
- sur la base dudit second polynôme, l'établissement (f) d'une courbe de limite inférieure ;
le procédé comprenant en outre, dans le processus de production (102) suivant ledit processus de configuration de production :
- le fait de déterminer (g) qu'une opération d'application d'élément de fixation effectuée par l'un quelconque dudit ou desdits outils est non conforme (NOK) si au moins une partie de ses données de trace dépasse la courbe de limite supérieure et/ou descend en dessous de la courbe de limite inférieure.

12. Programme informatique comprenant des instructions qui, lorsque le programme est exécuté par un ordinateur, amènent l'ordinateur à mettre en œuvre le procédé selon la revendication 11.

13. Support de stockage lisible par ordinateur comprenant des instructions qui, lorsqu'elles sont exécutées par un ordinateur, amènent l'ordinateur à mettre en œuvre le procédé selon la revendication 11.
